# EUROPÄISCHE PATENTANMELDUNG

(11) **EP 1 253 693 A1**
(43) Veröffentlichungstag der Anmeldung: **30.10.2002**
(21) Anmeldenummer: 02008505.6
(22) Anmeldetag: 15.04.2002
(51) Int. Cl.: H02H 3/14, H02H 3/33

(54) **Fehlerspannungs-Schutzeinrichtung**

(30) Priorität: 26.04.2001 DE 10120570
(71) Anmelder: SIEMENS AKTIENGESELLSCHAFT, 80333 München (DE)
(72) Erfinder: Schmid, Reinhard, 93051 Regensburg (DE); Solleder, Reinhard, 93138 Lappersdorf (DE)

(57) **Zusammenfassung**

Es wird eine Fehlerspannungs-Schutzeinrichtung (1) mit einer Schaltmechanik (7) und mit einer Auswertevorrichtung (4) vorgeschlagen, die zwischen einem ersten Betriebszustand zur Fehlerspannungsmessung und einem zweiten Betriebszustand zur Impedanzermittlung umschaltet. Dabei wird sowohl bei Abweichung einer erfassten Fehlerspannung (U_{F}) von einem ersten Schwellwert (S_{U}) als auch bei einer Abweichung der ermittelten Impedanz (IMP) von einem zweiten Schwellwert (S_{Imp}) ein Auslösesignal (S_{A}) an die Schaltmechanik (7) abgegeben.

## Beschreibung

Die Erfindung bezieht sich auf eine Fehlerspannungs-Schutzeinrichtung mit einer Schaltmechanik, die bei Erreichen einer definierten Fehlerspannung ein Leiternetz abschaltet.

Eine Fehlerspannungs(FU)-Schutzeinrichtung wird üblicherweise zur Realisierung von Schutzmaßnahmen in einem elektrischen Energieversorgungsnetz eingesetzt. Eine derartige Fehlerspannungs- oder FU-Schutzeinrichtung verhindert das Bestehen bleiben zu hoher Berührungsspannung, indem ein entsprechender Schutzschalter schon bei einem geringen Auslösestrom abschaltet. Zur Erfassung einer Fehlerspannung wird bisher eine sogenannte Fehlerspannungs- bzw. FU-Spule eingesetzt, welche letztendlich die Fehlerspannung misst. Problematisch bei derartigen FU-Schutzeinrichtungen ist ein unbeabsichtigtes Kurzschließen der FU-Spule, so dass die ordnungsgemäße Auslösung der FU-Schutzeinrichtung im Fehlerfall blockiert und damit die Schutzmaßnahme außer Kraft gesetzt wird.

Der Erfindung liegt daher die Aufgabe zugrunde, eine Fehlerspannungs-Schutzeinrichtung anzugeben, die unter Vermeidung der genannten Nachteile einen besonders zuverlässigen Schutz ermöglicht.

Diese Aufgabe wird erfindungsgemäß gelöst durch die Merkmale des Anspruchs 1. Dabei bewirkt eine Auswertevorrichtung der Fehlerspannungs-Schutzeinrichtung ein Umschalten zwischen zwei Betriebsarten oder Betriebszuständen, nämlich dem eigentlichen Fehlerspannungsschutz einerseits und einer Impedanzmessung andererseits.

Dazu umfasst die Fehlerspannungs-Schutzeinrichtung innerhalb der Auswertevorrichtung eine Ablaufsteuerung zur Umschaltung zwischen den Betriebszuständen "Fehlerspannungsschutz" und "Impedanzmessung", wobei die Auswertevorrichtung sowohl im ersten Betriebszustand bei Abweichung einer erfassten Fehlerspannung von einem ersten Schwellwert als auch im zweiten Betriebszustand bei Abweichung einer ermittelten Impedanz von einem zweiten Schwellwert ein Auslösesignal für die Schaltmechanik erzeugt.

Gesteuert werden diese Abläufe zweckmäßigerweise durch einen Mikrocontroller und dessen Software. Dabei wird im ersten Betriebszustand "Fehlerspannungsschutz" zunächst die Spannung zwischen den üblichen FU-Schalterklemmen "K" und "H" erfasst. Übersteigt diese Spannung einen vorgebbaren Schwell- oder Grenzwert, so wird ein Auslösesignal erzeugt, das an die Schaltmechanik der FU-Schutzeinrichtung zur zweckmäßigerweise allpoligen Abschaltung geführt wird. Dazu umfasst die Auswertevorrichtung der FU-Schutzeinrichtung einen Spannungsmesser, der im ersten Betriebszustand die Fehlerspannung erfasst. Dadurch wird der Schutz gegen zu hohe Berührungsspannungen durch eine zweckmäßigerweise elektronische Spannungsmessung realisiert, welche die bekannten Nachteile der zur Spannungsmessung bisher eingesetzten FU-Spule mit deren Innenwiderstand und deren Strombedarf vermeidet.

Im zweiten Betriebszustand "Impedanzmessung" wird zunächst die Impedanz zwischen den FU-Schaltklemmen ermittelt. Unterschreitet die Impedanz einen wiederum vorgebbaren weiteren Schwell- bzw. Grenzwert, so erzeugt die Auswertevorrichtung ebenfalls ein entsprechendes Auslösesignal. Zur Impedanzmessung wird zweckmäßigerweise eine Gleich- oder Wechselspannung, die nieder-, mittel- oder hochfrequent sein kann, zwischen den FU-Schaltklemmen angelegt und ein dann fließender Strom gemessen.

Hierzu umfasst die Auswertevorrichtung zweckmäßigerweise eine schaltbare Spannungsquelle und einen Strommesser, wobei die Spannungsquelle über mindestens einen ansteuerbaren Schalter mit den FU-Schaltklemmen verbunden ist. Die Auswertevorrichtung, insbesondere der Mikrocontroller, berechnet dann aus dem erfassten Strom sowie aus der ebenfalls erfassten Spannung zwischen den FU-Klemmen die Impedanz und generiert bei Überschreiten des zugehörigen Grenzwertes das Auslösesignal.

In zweckmäßiger Ausgestaltung weist die Auswertevorrichtung eine Busankopplung auf, über die externe Steuerdaten erfasst und/oder interne Messdaten übertragen werden können. Dadurch können aktuelle Werte der Fehlerspannung und der Impedanz sowie deren zeitliche Verläufe zur Speicherung und/oder Weiterverarbeitung übertragen werden. Zudem können über ein Kommunikationssystem, z.B. einen sogenannten European Installation Bass (EIB), die Ansprechschwellen oder Schwellwert für die Fehlerspannung und die Impedanz entsprechend den betriebsbedingten Anforderungen verändert oder eingestellt werden.

Die Auswertevorrichtung der FU-Schutzeinrichtung wird mit einem Netzteil versorgt, das zweckmäßigerweise aus dem zu schützenden Leiter- oder Energieversorgungsnetz gespeist wird.

Die mit der Erfindung erzielten Vorteile bestehen insbesondere darin, dass durch eine Erweiterung des herkömmlichen Funktionsprinzips eines FU-Schutzschalters durch eine aktive Impedanzmessung ein Kurzschluss zwischen den FU-Schaltklemmen frühzeitig erkannt und entsprechende Schutzmaßnahmen eingeleitet werden können. Dadurch wiederum ist ein zuverlässiges Auslösen im Fehlerfall sichergestellt, so dass die FU-Schutzeinrichtung aufgrund deren im Vergleich zu einer Fehlerstromoder FI-Schutzeinrichtung geringen Ableitströme eine besonders effektive Schutzmaßnahme in einem elektrischen Energieversorgungsnetz darstellt.

Nachfolgend wird ein Ausführungsbeispiele der Erfindung anhand einer Zeichnung näher erläutert. Darin zeigen:
- FIG 1: eine erfindungsgemäße FU-Schutzeinrichtung in einer Blockdarstellung und
- FIG 2: in einer Funktionsdarstellung eine Auswertevorrichtung der FU-Schutzeinrichtung gemäß FIG 1.

Einander entsprechende Teile sind in beiden Figuren mit den gleichen Bezugszeichen versehen.

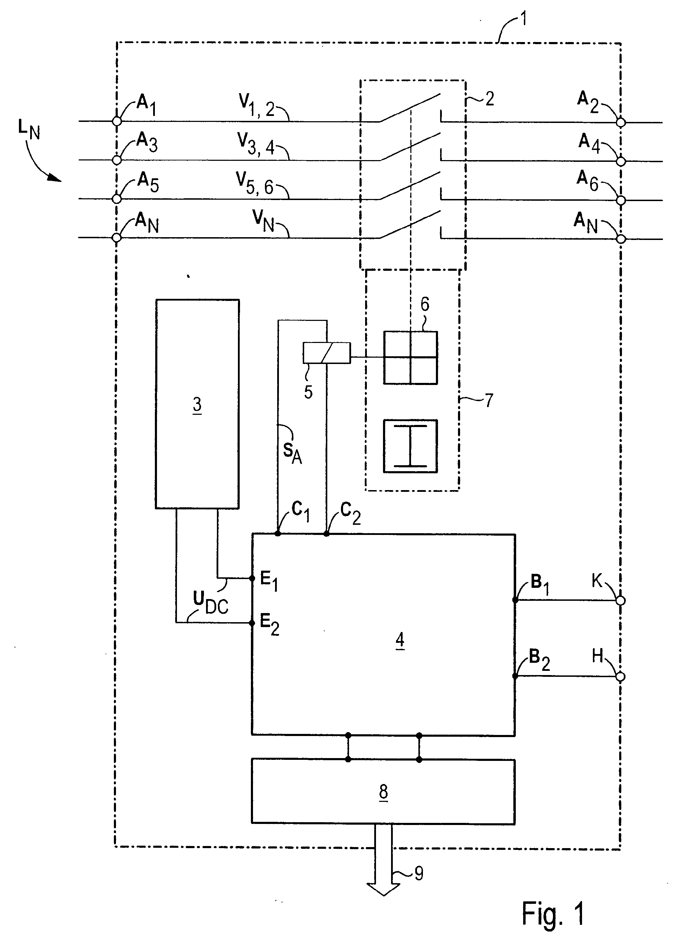

Die in FIG 1 dargestellte Fehlerspannungs- oder FU-Schutzeinrichtung 1 weist netzseitige Anschlussklemmen A₁, A₃, A₅ und A_{N} zum Anschluss an ein dreiphasiges Leiter- oder Energieversorgungsnetz L_{N} - mit den nicht näher bezeichneten Phasenleitern L1, L2,L3 und dem Nulleiter LN - sowie verbraucherseitige Anschlussklemmen A₂, A₄, A₆ und A_{N} zum Anschluss eines (nicht dargestellten) Verbrauchers auf. Innerhalb der FU-Schutzeinrichtung 1 sind die netzseitigen Anschlussklemmen A_{1,} A_{3,} A₅ und A_{N} über eine zum allpoligen Schalten dienenden Schalteinrichtung 2 mit den verbraucherseitigen Anschlussklemmen A_{2,} A_{4,} A₆, bzw. A_{N} verbunden.

An die entsprechenden Verbindungsleitungen V_{1,2}, V_{3,4}, V_{5,6} und V_{N} ist ein Netzteil 3 netzseitig angeschlossen. Das Netzteil 3 weist in nicht näher dargestellter, jedoch an sich bekannter Art und Weise einen Transformator und einen Gleichrichter sowie einen Glättungskondensator und einen Spannungsregler auf. Das Netzteil 3 ist ausgangsseitig mit Eingängen E₁, E₂, einer Auswertevorrichtung 4 verbunden und liefert an diese eine Gleichspannung U_{DC} von beispielsweise +/- 12 V. Diese Eingangsspannung U_{DC} wird innerhalb der Auswertevorrichtung 4 baugruppenspezifisch auf die üblicherweise vorgesehene Betriebsspannung von z.B. + 5 V heruntergeregelt.

Die Auswertevorrichtung 4 ist über Anschlüsse B₁ und B₂ mit den FU-Schaltklemmen, d.h. mit der üblichen Schutzleiteranschlussklemme A bzw. Hilfserdungsklemme H verbunden. Ausgangsseitig ist die Auswertevorrichtung 4 über einen Signalausgang in Form von Anschlüssen C₁, C₂ mit einem Auslöserelais 5 verbunden, das mechanisch mit einem Schaltschloss 6 einer Schaltmechanik 7 der FU-Schalteinrichtung gekoppelt ist. Die Schaltmechanik 7 wiederum ist über das Schaltschloss 6 mit den einzelnen Schaltern der Schalteinrichtung 2 mechanisch gekoppelt. Die Auswertevorrichtung 4 weist zudem eine Busankopplung 8 auf, über die ein durch den Datenpfeil 9 symbolisierter Datenaustausch mit einem übergeordneten Kommunikationssystem, z.B. EIB, möglich ist.

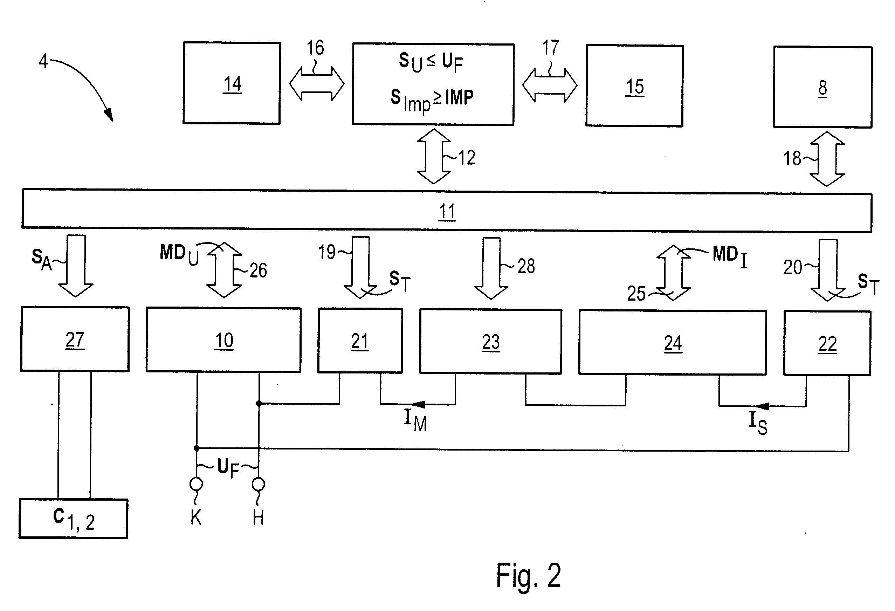

Der funktionale Aufbau der Auswertevorrichtung 4 ist in FIG 2 dargestellt. Herausgezeichnet sind die FU-Schaltklemmen K und H, die intern an einen Spannungsmesser 10 geführt sind. Der Spannungsmesser 10 ist über einen (nicht dargestellten) Anlaog-Digital-Wandler mit einem internen Datenbus in Form eines digitalen Input/Output-Ports 11 verbunden, der seinerseits über einen Bus 12 mit einem Mikrokontroller 13 kommuniziert. Dem Mikrokontroller 13 sind ein Programmspeicher 14 und ein Arbeitsspeicher 15 zugeordnet, deren Datenaustausch mit dem Mikrokontroller 13 durch Datenpfeile 16 bzw. 17 veranschaulicht ist. Innerhalb der Auswertevorrichtung 4 dient der Mikrokontroller 13 sowohl zur Ablaufsteuerung als auch zur Datenauswertung, insbesondere zur elektronischen Auswertung der nachfolgend näher beschriebenen Messwerte oder Messdaten.

Die Busankopplung 8 an den nachfolgend als Daten-Port bezeichneten digitalen Input/Output-Ports 11 ist ebenfalls durch einen Datenpfeil 18 symbolisiert. Wie durch die Steuerpfeile 19 und 20 angedeutet, steuert der Mikrokontroller 13 der Auswertevorrichtung 4 im Ausführungsbeispiel zwei Analogschalter 21 bzw. 22, die zur Umschaltung zwischen zwei Betriebszuständen oder Betriebsarten der FU-Schutzeinrichtung 1 dienen. Zwischen den Schaltern 21 und 22 liegen eine Spannungsquelle 23 und ein Strommesser 24, der vom Mikrokontroller 13 angesteuert wird und wiederum über einen (nicht dargestellten) Analog/Digital-Wandler Messdaten MD_{I} an den Mikrokontroller 13 liefert, wie durch den Daten- und Steuerpfeil 25 angedeutet. Analog wird der Spannungsmesser 10 vom Mikrokontroller 13 der Auswertevorrichtung 4 gesteuert und liefert an diesen über den Analog/Digital-Wandler Messdaten MD_{U}, wie durch den Daten- und Steuerpfeil 26 angedeutet.

Im ersten Betriebszustand "Fehlerspannungsschutz" sind die beiden Analogschalter 21 und 22 geöffnet, so dass lediglich der dem Spannungsmesser 10 entsprechende Funktionsbaustein der Auswertevorrichtung 4 an den FU-Schaltklemmen K und H liegt. Die in diesem Betriebszustand vom Spannungsmesser 10 erfasste Fehlerspannung U_{F} wird mittels des Anlaog/Digital-Wandlers digitalisiert und als digitaler Messwert MD_{U} an den Mikrocontroller 13 übergeben. Dieser vergleicht den aus der gemessenen Fehlerspannung U_{F} abgeleiteten Messwert MD_{U} mit einem hinterlegten, veränderbaren ersten Schwellwert S_{U}, der beispielsweise auf 25 V eingestellt ist.

Überschreitet beim Erreichens einer definierten Fehlerspannung U_{F} der aus der gemessenen Spannung U_{F} abgeleitete Messwert MD_{U} den Schwellwert S_{U}, so leitet der Mikrokontroller 13 durch Ansteuerung des Auslöserelais 5 über einen analogen Ausgang 27 die Auslösung der Schutzeinrichtung 1 ein. Dazu liefert die Auswerteeinrichtung 4 ein entsprechendes Auslösesignal SA über den Ausgang 27 an die Anschlüsse C₁, C₂ und von dort an das Auslöserelais 5, das seinerseits infolge des Auslösesignals oder Auslösebefehls SA das Schaltschloss 6 betätigt. Dies wiederum betätigt die Schalteinrichtung 2 zur allpoligen Abschaltung des Leiternetzes L_{N}. Der Schwellwert S_{U} ist auf die durch die definierte Fehlerspannung U_{F} festgelegte Auslöseschwelle der FU-Schutzeinrichtung 1 eingestellt.

Gemäß einer vom Mikrokontroller 13 der Auswertevorrichtung 4 vorgegebenen, z.B. zyklischen Ablaufsteuerung schaltet die Auswertevorrichtung 4 vom ersten Betriebszustand "Fehlerspannungsschutz" auf einen zweiten Betriebszustand "Impedanzmessung" um. Dazu erzeugt der Mikrokontroller 13 der Auswertevorrichtung 4 einen entsprechenden Steuerbefehl ST für die Schalter 21 und 22, so dass diese geschlossen sind. Infolge dessen treibt die Spannungsquelle 23 einen Messstrom I_{M} über mit den FU-Schaltklemmen K und H elektrisch verbundene (nicht dargestellte) Teile der Installation. Dabei kann der Messstrom I_{S} ein Gleichstrom oder ein Wechselstrom mit praktisch beliebiger Frequenz sein. Die Spannungsquelle 23 kann stets aktiv oder aber durch Ansteuerung vom Mikrokontroller 13 aktiviert werden, wie durch den Steuerpfeil 28 angedeutet. Auch kann anstelle der beiden Analogschalter 21, 22 lediglich ein einzelner Schalter vorgesehen sein.

In diesem zweiten Betriebszustand "Impedanzmessung" wird ein vom Strommesser 24 erfasstes Stromsignal I_{S} wiederum mittels dessen Analog/Digital-Wandler digitalisiert. Der entsprechende digitale Messwert MD_{I} wird mit dem vom Spannungsmesser 10 erfassten und ebenfalls digitalisierten Spannungsmesswert MD_{U} zu einem Impedanzwert IMP verknüpft. Unterschreitet dieser Impedanzwert IMP einen zweiten Schwellwert S_{Imp}, so wird wiederum ein Auslösesignal S_{A} erzeugt, das über den Ausgang 27 an das Auslöserelais 5 zur allpoligen Abschaltung geführt wird.

Durch die Erweiterung der bisherigen Funktion der FU-Schutzeinrichtung oder eines FU-Schutzschalters in Form des eigentlichen Fehlerspannungsschutzes um die aktive Impedanzmessung kann ein - auch unbeabsichtigter - Kurzschluss zwischen den FU-Schaltklemmen frühzeitig erkannt und eine entsprechende Schutzmaßnahme eingeleitet werden. Dadurch erfüllt der FU-Schutzschalter auch hohe Sicherheitsanforderungen hinsichtlich des Berührungsschutzes.

## Patentansprüche

1. Fehlerspannungs-Schutzeinrichtung mit einer Schaltmechanik (7), die bei Erreichen einer definierten Fehlerspannung (U_{F}) zwischen einem Schutzleiteranschluss (K) und einem Hilfserdungsanschluss (H) ein Leiternetz (LN) abschaltet, und mit einer Auswertevorrichtung (4), die eine Umschaltung zwischen einem ersten Betriebszustand zur Messung der Fehlerspannung (U_{F}) und einem zweiten Betriebszustand zur Ermittlung der Impedanz (IMP) zwischen dem Schutzleiteranschluss (K) und dem Hilfserdungsanschluss (H) steuert.

2. Fehlerspannungs-Schutzeinrichtung nach Anspruch 1, wobei eine Auswertevorrichtung (4) im ersten Betriebszustand die Spannung (U_{F}) zwischen dem Schutzleiteranschluss (K) und dem Hilfserdungsanschluss (H) erfasst und bei deren Abweichung von einem ersten Schwellwert (S_{U}) ein Auslösesignal (S_{A}) an die Schaltmechanik (7) abgibt.

3. Fehlerspannungs-Schutzeinrichtung nach Anspruch 1 oder 2, wobei die Auswertevorrichtung (4) im zweiten Betriebszustand bei einer Abweichung der ermittelten Impedanz (IMP) von einem zweiten Schwellwert (S_{Imp}) ein Auslösesignal (S_{A}) an die Schaltmechanik (7) abgibt.

4. Fehlerspannungs-Schutzeinrichtung nach einem der Ansprüche 1 bis 3, wobei die Auswertevorrichtung (4) einen Spannungsmesser (10) zur Erfassung der Spannung (U_{F}) zwischen dem Schutzleiteranschluss (K) und dem Hilfserdungsanschluss (H) umfasst.

5. Fehlerspannungs-Schutzeinrichtung nach einem der Ansprüche 1 bis 4, wobei die Auswertevorrichtung (10) zur Impedanzermittlung eine zwischen den Schutzleiteranschluss (K) und den Hilfserdungsanschluss (H) schaltbare Spannungsquelle (23) zur Erzeugung eines Messstroms (I_{M}) und einen Strommesser (24) zur Erfassung eines daraus resultierenden Stromsignals (Iₛ) umfasst.

6. Fehlerspannungs-Schutzeinrichtung nach Anspruch 5, wobei die Spannungsquelle (23) über mindestens einen ansteuerbaren Schalter (21,22) mit dem Schutzleiteranschluss (K) und mit dem Hilfserdungsanschluss (H) verbunden ist.

7. Fehlerspannungs-Schutzeinrichtung nach einem der Ansprüche 4 bis 6, wobei der Spannungsmesser (10) und/oder der Strommesser (24) über einen digitalen Input/Output-Port (11) an einen Mikrokontroller (13) zur Messdatenauswertung und Ablaufsteuerung geführt sind.

8. Fehlerspannungs-Schutzeinrichtung nach einem der Ansprüche 1 bis 7, wobei die Auswertevorrichtung (4) über einen Signalausgang (C_{1,2}) mit einem mit der Schaltmechanik (7) gekoppelten Auslöserelais (5) verbunden ist.

9. Fehlerspannungs-Schutzeinrichtung nach einem der Ansprüche 1 bis 8, wobei die Auswertevorrichtung (4) eine Busankopplung (8) zur Übertragung externer Steuerdaten und/oder interner Messdaten (MD_{I,U}) aufweist.

10. Fehlerspannungs-Schutzeinrichtung nach einem der Ansprüche 1 bis 9, an deren netzseitigen Anschlussklemmen (A_{1,3,5,N}) ein Netzteil (3) eingangsseitig angeschlossen ist, das ausgangsseitig mit der Auswertevorrichtung (4) verbunden ist.
